# EUROPEAN PATENT APPLICATION

(11) **EP 2 579 420 A2**
(43) Date of publication of application: **10.04.2013**
(21) Application number: 11194912.9
(22) Date of filing: 21.12.2011
(51) Int. Cl.: H02J 7/00, H02J 7/02

(54) **Wireless charger with position-guiding mechanism**

(30) Priority: 07.10.2011 TW 100136605
(71) Applicant: Primax Electronics Ltd, Taipei (TW)
(72) Inventor: Chen, Chih Hung, Taiwan, ROC Taipei (TW)
(74) Representative: Rees, Simon John Lewis

(57) **Abstract**

A wireless charger includes a wireless charging body, a carrier and an elastic element. The wireless charging body has a track. The carrier includes an extension part, which is movably disposed on the track. The elastic element is connected with the carrier for providing a pulling force to the carrier, so that the carrier is maintained at an initial position. When an electronic device is held by the carrier, the carrier is moved from the initial position to a charging position along the track in response to a gravity force of the electronic device, so that a receiver coil of the electronic device is aligned with a transmitter coil of the wireless charging body. When the electronic device is not held by the carrier, the carrier is returned to the initial position in response to the pulling force.

## Description

### FIELD OF THE INVENTION

The present invention relates to a wireless charger, and more particularly to a wireless charger with a position-guiding mechanism.

### BACKGROUND OF THE INVENTION

With increasing development of science and technology, portable electronic devices have experienced great growth and are now rapidly gaining in popularity. Consequently, the portable electronic devices become more essential and are frequently used in various occasions. However, the display screen and the microprocessor of the high-tech portable electronic device consume a great deal of electric power. In addition, as the operating frequency of the portable electronic device is gradually increased, the residual electric quantity of the battery is quickly exhausted after the portable electronic device has been used for a certain time period. Under this circumstance, the portable electronic device of the user is usually suffered from a problem of insufficient battery electric quantity. Generally, for maintaining the power requirements in the next day, the portable electronic device needs to be charged every day.

Conventionally, the commercially available charger is equipped with a power cable. Through the power cable, the charger is in communication with the portable electronic device in physical connection for charging the portable electronic device. However, since the trend of designing the portable electronic device is toward small size and light weightiness, the portable electronic device and the charger are developed toward light weightiness and miniaturization. As the portable electronic device and the charger are developed toward light weightiness and miniaturization, the charging plug of the power cable of the charger and the charging slot of the portable electronic device are both shrunken. In a case that the user wants to charge the portable electronic device, the user should carefully align the charging plug with the charging slot in order to inert the charging plug into the charging slot. In other words, the procedure of aligning the charging plug with the charging slot is very inconvenient.

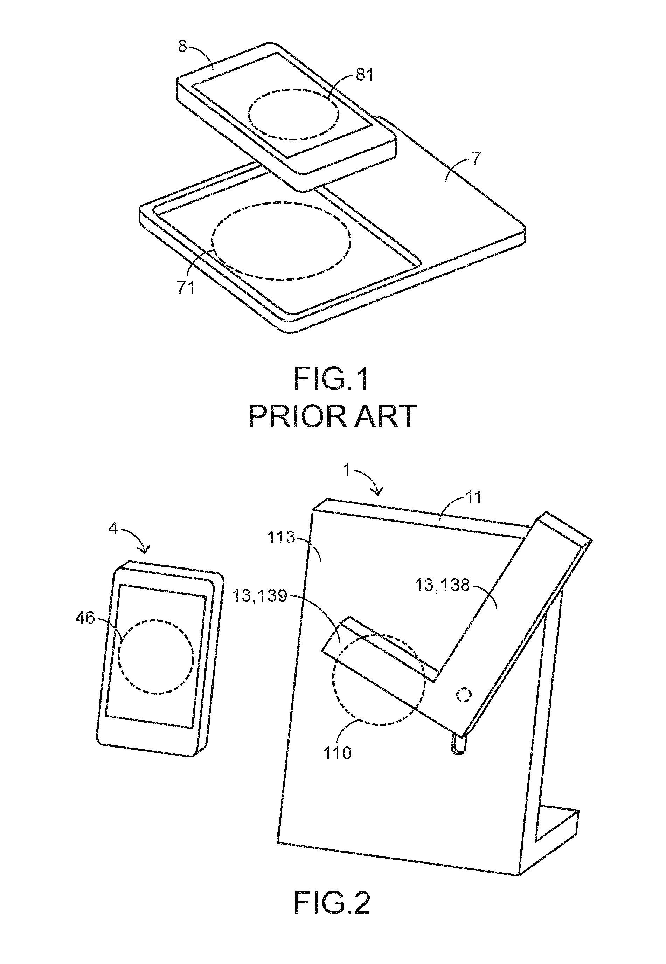

For solving the above drawbacks, a wireless charger is disclosed. FIG. 1 is a schematic perspective view illustrating a wireless charger for charging a portable electronic device according to the prior art. As shown in FIG. 1, the wireless charger 7 has a transmitter coil 71. Moreover, a receiver coil 81 is included in the portable electronic device 8 for receiving signals from the transmitter coil 71 of the wireless charger 7, so that a wireless charging operation is performed. Generally, the charging efficiency for the wireless charging technology is principally dependent on whether the center of the receiver coil 81 and the center of the transmitter coil 71 are aligned with each other. Since the commercially available wireless charger 7 has no mechanism for precisely positioning the portable electronic device 8, the receiver coil 81 fails to be precisely aligned with the center of the transmitter coil 71. Under this circumstance, the efficiency of charging the portable electronic device 8 by the wireless charger 7 is deteriorated or the portable electronic device 8 fails to be accurately charged.

From the above discussions, during operations of the conventional horizontal-type wireless charger, the portable electronic device should be deliberately located near or aligned with the center of the wireless charger. For obviating the drawbacks encountered from the prior art, there is a need of providing a wireless charger with a position-guiding mechanism for precisely aligning the transmitter coil with the receiver coil, thereby increasing the charging efficiency and using flexibility.

### SUMMARY OF THE INVENTION

The present invention relates to a wireless charger with a position-guiding mechanism. By the position-guiding mechanism, the electronic device is precisely aligned with the wireless charger, so that the efficiency of charging the portable electronic device is enhanced.

In accordance with an aspect of the present invention, there is provided a wireless charger with a position-guiding mechanism. An electronic device with a receiver coil is charged by the wireless charger. The wireless charger includes a wireless charging body, a carrier and an elastic element. The wireless charging body has a track and a transmitter coil. The carrier is used for supporting the electronic device, wherein the carrier includes an extension part, which is movably disposed on the track. The elastic element is connected with the carrier for providing a pulling force to the carrier, so that the carrier is maintained at an initial position. When the electronic device is held by the carrier, the carrier to be moved from the initial position to a charging position along the track in response to a gravity force of the electronic device, so that the receiver coil of the electronic device is aligned with the transmitter coil of the wireless charging body. When the electronic device is not held by the carrier, the carrier is returned to the initial position in response to the pulling force of the elastic element.

In an embodiment, the carrier further includes a main gear, wherein the main gear is pivotally coupled to the extension part through a shaft.

In an embodiment, the track has a plurality of first toothed structures, and the main gear is engaged with the first toothed structures. When the carrier is moved along the track in response to the gravity force of the electronic device, the main gear is rotated relative to the shaft.

In an embodiment, the carrier further includes a lateral arm and a bottom plate for supporting the electronic device. The lateral arm and the bottom plate are fixed on the main gear. When the electronic device is leant against the lateral arm and the bottom plate of the carrier, the carrier is moved along the track in response to the gravity force of the electronic device, and the lateral arm and the bottom plate are rotated relative to the shaft through the main gear.

In an embodiment, the wireless charging body has a contact surface for supporting the electronic device, and the contact surface is located adjacent to the lateral arm and the bottom plate. When the electronic device is leant against the contact surface of the wireless charging body and the lateral arm and the bottom plate of the carrier, the carrier is moved along the track in response to the gravity force of the electronic device, and the lateral arm and the bottom plate are rotated relative to the shaft through the main gear.

In an embodiment, the wireless charging body further includes a cushioning element, and the cushioning element is sustained against the extension part.

In an embodiment, the extension part has a plurality of second toothed structures, and the cushioning element is sustained against the second toothed structures.

In an embodiment, the cushioning element is a damping gear.

In an embodiment, the extension part of the carrier has a terminal part, wherein the elastic element is fixed on the terminal part of the carrier.

In an embodiment, the extension part of the carrier has a lateral surface, wherein the elastic element is fixed on the lateral surface of the extension part.

In an embodiment, the wireless charging body further includes a position-limiting element. When the electronic device is not held by the carrier, the carrier is stopped by the position-limiting element, so that the position-limiting element is maintained at the initial position.

In an embodiment, the elastic element is a line spring.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a wireless charger for charging a portable electronic device according to the prior art;

FIG. 2 is a schematic perspective view illustrating a wireless charger with a position-guiding mechanism according to an embodiment of the present invention;

FIG. 3 a schematic exploded view illustrating the wireless charger as shown in FIG. 2;

FIG. 4A is a schematic front view illustrating a wireless charger with a position-guiding mechanism according to an embodiment of the present invention, in which the electronic device is not held by the carrier; and

FIG. 4B is a schematic front view illustrating a wireless charger with a position-guiding mechanism according to an embodiment of the present invention, in which the electronic device is held by the carrier.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. In the following embodiments and drawings, the elements irrelevant to the concepts of the present invention are omitted and not shown. For well understanding the present invention, the elements shown in the drawings are not in scale with the elements of the practical product.

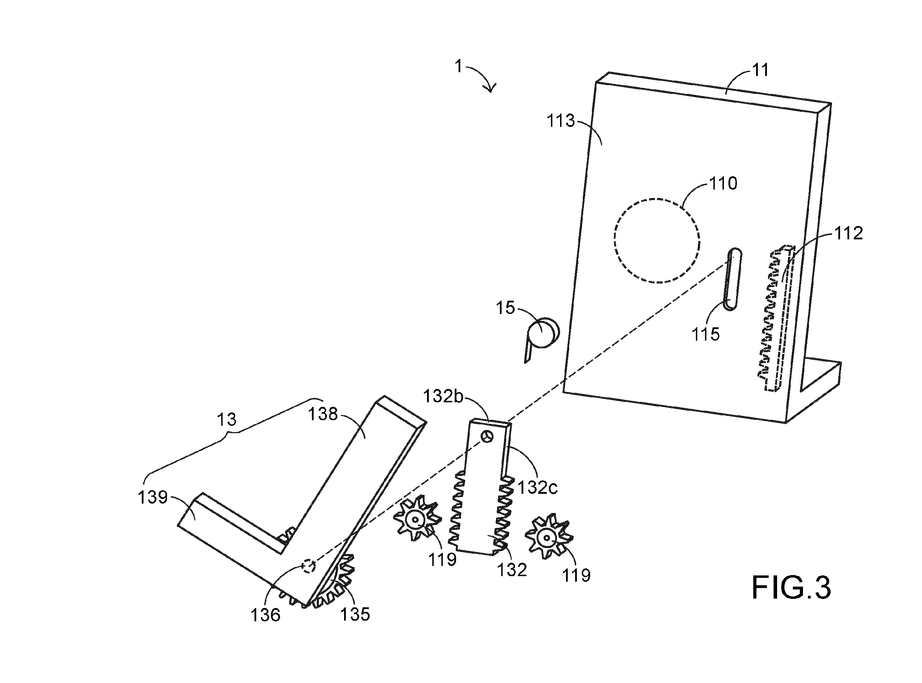

FIG. 2 is a schematic perspective view illustrating a wireless charger with a position-guiding mechanism according to an embodiment of the present invention. FIG. 3 a schematic exploded view illustrating the wireless charger as shown in FIG. 2. As shown in FIGS. 2 and 3, the wireless charger 1 is used for charging an electronic device 4 that has a receiver coil 46. The wireless charger 1 comprises a wireless charging body 11, a carrier 13 and an elastic element 15. The wireless charging body 11 has a transmitter coil 110 and a track 112. The transmitter coil 110 is usually disposed within the wireless charging body 11. When the transmitter coil 110 of the wireless charging body 11 creates an alternating electromagnetic field, the receiver coil 46 takes power from the electromagnetic field and converts the power into an electric current. The electric current is transmitted to the electronic device 4 to charge the electronic device 4.

In the wireless charger 1 with a position-guiding mechanism, the elastic element 15 is connected with the carrier 13 and the wireless charging body 11. The elastic element 15 is disposed within the wireless charging body 11 for maintaining a concise appearance of the wireless charger 1. The way of connecting the elastic element 15 and the carrier 13 is not restricted as long as the carrier 13 is able to be maintained at an initial position relative to the wireless charging body 11. In this embodiment, the elastic restoring force provided by the elastic element 15 is a pulling force. Before the electronic device 4 is held by the carrier 13, the carrier 13 is pulled by the elastic element 15 to be maintained and positioned at the initial position.

Please refer to FIGS. 2 and 3 again. The carrier 13 has an extension part 132. The extension part 132 is movably disposed on the track 112. In this embodiment, the track 112 of the wireless charging body 11 is substantially arranged in a vertical direction (but is not limited to the vertical direction). That is, the track 112 is arranged along the line directed to the earth's center. Due to a gravity force, the carrier 13 may be moved along the track 112. Moreover, the carrier 13 is used for holding the electronic device 4. When the electronic device 4 is held by the carrier 13, the carrier 13 is moved from the initial position to a charging position along the track 112 in response to the gravity force of the electronic device. After the electronic device 4 is moved to the charging position, the center of the transmitter coil 110 of the wireless charging body 11 is substantially aligned with the center of the receiver coil 46 of the electronic device 4. In other words, the charging position is a position where the electronic device 4 is charged the most efficiently by the wireless charging body 11. In accordance with the present invention, the charging operation is performed by the wireless charger 1 when the electronic device 4 is at the charging position. Meanwhile, as the carrier 13 is moved, the elastic element 15 which is connected with the carrier 13 and the wireless charging body 11 is subject to tensile deformation. Due to the tensile deformation, an elastic potential energy is stored in the elastic element 15. After the charging operation is completed and the electronic device 4 is removed from the carrier 13, the gravity force of the electronic device exerted on the carrier 13 is eliminated. Consequently, due to the elastic potential energy is stored in the elastic element 15, the carrier 13 is returned to the initial position.

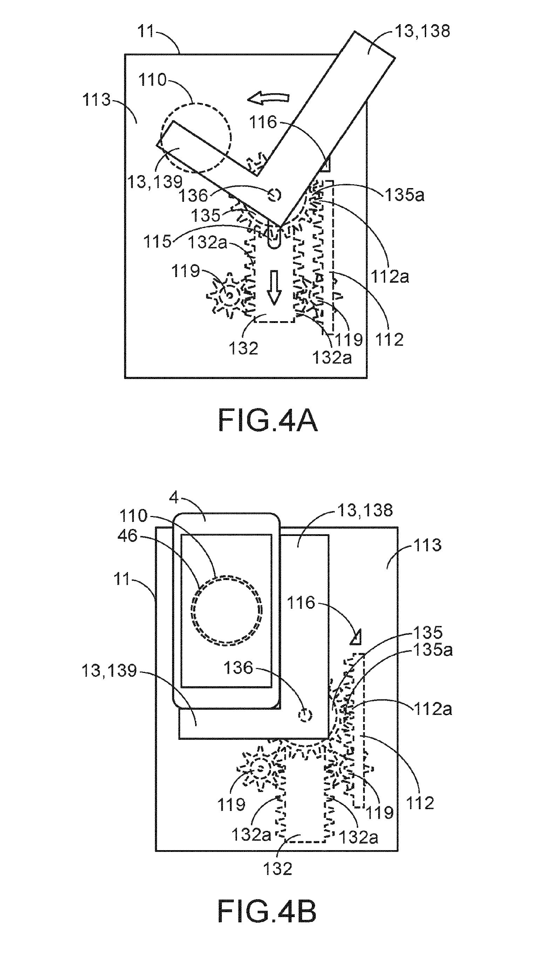

FIG. 4A is a schematic front view illustrating a wireless charger with a position-guiding mechanism according to an embodiment of the present invention, in which the electronic device is not held by the carrier. FIG. 4B is a schematic front view illustrating a wireless charger with a position-guiding mechanism according to an embodiment of the present invention, in which the electronic device is held by the carrier. As shown in FIGS. 4A and 4B, the carrier 13 comprises a main gear 135. The main gear 135 is pivotally coupled to the extension part 132 through a shaft 136. Consequently, the main gear 135 is rotatable relative to the extension part 132. Moreover, the carrier 13 further comprises a lateral arm 138 and a bottom plate 139 for holding the electronic device 4. The main gear 135 is fixed on the lateral arm 138 and the bottom plate 139. Consequently, as the main gear 135 is rotated, the lateral arm 138 and the bottom plate 139 are synchronously rotated with the main gear 135 by the same angle, and rotated relative to the extension part 132. Moreover, in this embodiment, the main gear 135 and the extension part 132 are disposed within the wireless charging body 11, and the lateral arm 138 and the bottom plate 139 are disposed outside the wireless charging body 11. The shaft 136 is penetrated through a slot 115 of the wireless charging body 11, so that the lateral arm 138 and the bottom plate 139 are fixed on the main gear 135. After the wireless charger 1 with the position-guiding mechanism is assembled, only the lateral arm 138 and the bottom plate 139 are exposed to be manipulated by the user. Consequently, the overall appearance of the wireless charger 1 is very concise. This embodiment is presented herein for purpose of illustration and description only. However, those skilled in the art will readily observe that numerous modifications and alterations of the carrier 13 may be made while retaining the teachings of the invention.

On the other hand, the track 112 of the wireless charging body 11 has a plurality of first toothed structures 112a. The first toothed structures 112a are engaged with the peripheral toothed surface 135a of the main gear 135. In this embodiment, the first toothed structures 112a are successively arranged along the track 112a (e.g. in the vertical direction). When the electronic device 4 is held by the lateral arm 138 and the bottom plate 139 of the carrier 13, the carrier 13 is moved toward the earth's center in response to the gravity force of the electronic device 4, and the main gear 135 is correspondingly rotated. That is, during the carrier 13 is gradually moved along the track 112, the lateral arm 138 and the bottom plate 139 is synchronously rotated with the main gear 135.

Please refer to FIGS. 4A and 4B again. Generally, if the carrier 13 is moved downwardly too fast, the possibility of damaging the electronic device 4 is increased. For avoiding damage of the electronic device 4, the wireless charging body 11 further comprises a cushioning element 119. The cushioning element 119 is sustained against the extension part 132 for slightly hindering the downward movement of the extension part 132 while reducing the moving speed of the carrier 13 downwardly. In this embodiment, for allowing the cushioning element 119 to be sustained against the extension part 132, the extension part 132 has a plurality of second toothed structures 132a. The second toothed structures 132a are formed on both edges of the extension part 132, and the cushioning element 119 could be a damping gear. Moreover, in a more preferred embodiments, the cushioning element 119 comprises a pair of damping gears, which are respectively sustained against the second toothed structures 132a on the both edges of the extension part 132. Consequently, the gravity force loaded on the damping gears can be uniformly exerted on the damping gears. When the carrier 13 to be moved downwardly in response to the gravity force of the electronic device 4, the moving speed of the extension part 132 is reduced by means of the damping gears. Under this circumstance, the carrier 13 and the electronic device 4 can be smoothly moved downwardly at a steady speed.

Please refer to FIGS. 2, 3, 4A and 4B again. The wireless charging body 11 has a contact surface 113 to be contacted with the electronic device 4. Moreover, the contact surface 113 is located adjacent to the lateral arm 138 and the bottom plate 139. Consequently, the electronic device 4 may be simultaneously leant against the contact surface 113 of the wireless charging body 11 and the lateral arm 138 and the bottom plate 139 of the carrier 13. At the same time, the carrier 13 to be moved along the track 112 in response to the gravity force of the electronic device, and the rotation of the main gear 135 may result in rotation of the lateral arm 138 and the bottom plate 139 relative to the shaft 136. Until the electronic device 4 supported on the carrier 13 is rotated to the charging position upon rotation of the lateral arm 138 and the bottom plate 139, the electronic device 4 is placed upright.

Please refer to FIG. 3 again. Hereinafter, a method of installing the elastic element 15 of the wireless charger 1 will be illustrated in more details. In this embodiment, the elastic element 15 is a line spring. There are some approaches for connecting the line spring. In a first approach, the extension part 132 of the carrier 13 has a terminal part 132b, and an end of the elastic element 15 is fixed on the terminal part 132b of the carrier 13. In a second approach, the extension part 132 of the carrier 13 has a lateral surface 132c, and the elastic element 15 is fixed on the lateral surface 132c of the extension part 132. In such way, when the elastic potential energy stored in the elastic element 15 is released, the extension part 132 can be pulled back to the initial position. The way of connecting the elastic element 15 is presented herein for purpose of illustration and description only. Moreover, the wireless charging body 11 further comprises a position-limiting element 116 for limiting the position of the carrier 13. The position-limiting element 116 is sustained against the carrier 13 so as to prevent the carrier 13 from being overly displaced by the pulling force of the elastic element 15. Consequently, if the electronic device 4 is not held by the carrier 13, the carrier 13 is stopped by the position-limiting element 116 to be maintained at the initial position. It is noted that numerous modifications and alterations may be made while retaining the teachings of the invention. For example, the position-limiting element 116 may be sustained against the extension part 132 for stopping the carrier 13.

From the above description, the present invention provides wireless charger with a position-guiding mechanism. When the electronic device is placed on the carrier by the user, the carrier may be self-moved to the charging position in response to the gravity force of the electronic device. The charging position is a position where the electronic device is charged the most efficiently by the wireless charger. According to the present invention, since the receiver coil of the electronic device and the transmitter coil of the wireless charger can be precisely aligned with each other, the efficiency of charging the electronic device will be enhanced. Consequently, the drawbacks encountered from the prior art will be obviated.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A wireless charger with a position-guiding mechanism, used for charging an electronic device with a receiver coil, said wireless charger comprising:
a wireless charging body having a track and a transmitter coil;
a carrier for holding said electronic device, wherein said carrier comprises an extension part which is movably disposed on said track; and
an elastic element connected with said carrier for providing a pulling force to said carrier, so that said carrier is maintained at an initial position,
wherein when said electronic device is held by said carrier, said carrier is moved from said initial position to a charging position along said track in response to a gravity force of said electronic device, so that said receiver coil of said electronic device is aligned with said transmitter coil of said wireless charging body, wherein when said electronic device is not held by said carrier, said carrier is returned to said initial position in response to said pulling force of said elastic element.

2. The wireless charger according to claim 1 wherein said carrier further comprises a main gear, wherein said main gear is pivotally coupled to said extension part through a shaft.

3. The wireless charger according to claim 2 wherein said track has a plurality of first toothed structures, and said main gear is engaged with said first toothed structures, wherein when said carrier is moved along said track in response to said gravity force of said electronic device, said main gear is rotated relative to said shaft.

4. The wireless charger according to claim 3 wherein said carrier further comprises a lateral arm and a bottom plate for supporting said electronic device, wherein said lateral arm and said bottom plate are fixed on said main gear, wherein when said electronic device is leant against said lateral arm and said bottom plate of said carrier, said carrier is moved along said track in response to said gravity force of said electronic device, and said lateral arm and said bottom plate are rotated relative to said shaft through said main gear.

5. The wireless charger according to claim 4 wherein said wireless charging body has a contact surface for supporting said electronic device, and said contact surface is located adjacent to said lateral arm and said bottom plate, wherein when said electronic device is leant against said contact surface of said wireless charging body and said lateral arm and said bottom plate of said carrier, said carrier is moved along said track in response to said gravity force of said electronic device, and said lateral arm and said bottom plate are rotated relative to said shaft through said main gear.

6. The wireless charger according to claim 5 wherein said wireless charging body further comprises a cushioning element, and said cushioning element is sustained against said extension part.

7. The wireless charger according to claim 6 wherein said extension part has a plurality of second toothed structures, and said cushioning element is sustained against said second toothed structures.

8. The wireless charger according to claim 7 wherein said cushioning element is a damping gear.

9. The wireless charger according to claim 7 wherein said extension part of said carrier has a terminal part, wherein said elastic element is fixed on said terminal part of said carrier.

10. The wireless charger according to claim 7 wherein said extension part of said carrier has a lateral surface, wherein said elastic element is fixed on said lateral surface of said extension part.

11. The wireless charger according to claim 7 wherein said wireless charging body further comprises a position-limiting element, wherein when said electronic device is not held by said carrier, said carrier is stopped by said position-limiting element, so that said carrier is maintained at said initial position.

12. The wireless charger according to claim 1 wherein said elastic element is a line spring.
